# EUROPEAN PATENT APPLICATION

(11) **EP 4 321 374 A1**
(43) Date of publication of application: **14.02.2024**
(21) Application number: 23182119.0
(22) Date of filing: 28.06.2023
(51) Int. Cl.: B60L 53/64, B60L 58/12, B60L 55/00

(54) **ENERGY MANAGEMENT METHOD, STORAGE MEDIUM STORING PROGRAM, AND COMPUTER DEVICE**

(30) Priority: 10.08.2022 JP 2022127688
(71) Applicant: TOYOTA JIDOSHA KABUSHIKI KAISHA, Toyota-shi, Aichi-ken, 471 8571 (JP)
(72) Inventor: TAKAHASHI, Tomoya, Toyota-shi, 471-8571 (JP)
(74) Representative: D Young & Co LLP

(57) **Abstract**

An energy management method includes determining whether a current time is within a target period (S1 1), and executing energy management within the target period by a target resource selected from among a plurality of power storage devices (S12 to S15). The executing the energy management includes charging the target resource to execute the energy management within the target period, and reselecting the target resource from among the power storage devices for suppression of a state in which each of the power storage devices reaches a target charging amount within the target period.

## Description

### BACKGROUND OF THE INVENTION

### 1. Field of the Invention

The present disclosure relates to an energy management method, a storage medium storing a program, and a computer device.

### 2. Description of Related Art

Japanese Unexamined Patent Application Publication No. 2020-156149 (JP 2020-156149 A) discloses a virtual power plant (VPP) system using battery electric vehicles. The virtual power plant (VPP) is a scheme in which a large number of distributed energy resources (DERs) are bundled through an advanced energy management technology that uses Internet of Things (IoT), and in which the DERs are controlled remotely and integrally to function as if they were a single power plant.

### SUMMARY OF THE INVENTION

In energy management, a plurality of power storage devices (for example, power storage devices mounted on battery electric vehicles) may be used. In such a method, the power storage devices are charged simultaneously to execute energy management with greater charging power than that in a case of charging of only one power storage device. When any power storage device is fully charged during the energy management, however, the maximum charging power of the power storage devices (upper limit power that can charge the power storage devices) decreases. Therefore, there is a possibility that the power storage devices cannot be charged with electric power required for the energy management.

The present disclosure provides an energy management method, a storage medium storing a program, and a computer device in which a decrease in maximum charging power of a plurality of power storage devices is suppressed in energy management using the power storage devices.

According to a first aspect of the present disclosure, the following energy management method is provided.

### Section 1

The energy management method includes determining whether a current time is within a target period, and executing energy management within the target period by a target resource selected from among a plurality of power storage devices. The executing the energy management includes charging the target resource to execute the energy management within the target period, and reselecting the target resource from among the power storage devices for suppression of a state in which each of the power storage devices reaches a target charging amount within the target period.

The target period is a period during which the energy management is executed. In the above method, the target resource is reselected from among the power storage devices for the suppression of the state in which each of the power storage devices reaches the target charging amount within the target period. For example, in the above method, the target resource is reselected from among the power storage devices so that none of the power storage devices is fully charged within the target period. This suppresses the state in which any of the power storage devices reaches the target charging amount during the energy management. According to this process, it is possible to suppress the decrease in the maximum charging power of the power storage devices in the energy management using the power storage devices.

The energy management method according to section 1 may have a configuration according to any one of sections 2 to 5.

### Section 2

The energy management method according to section 1 may further have the following features. In the energy management method, the power storage devices may be mounted on vehicles. The reselecting the target resource may include selecting the target resource by using remaining power storage amounts of the power storage devices and scheduled departure times of the vehicles.

By reselecting the target resource (charging target) to suppress the state in which the power storage devices are fully charged within the target period, there is a concern that the remaining power storage amounts of the power storage devices cannot be increased to the target values by the scheduled departure times of the vehicles. In this regard, in the above method, the target resource is selected by using the remaining power storage amounts of the power storage devices and the scheduled departure times of the vehicles. According to the above method, it is easier to achieve both the state in which none of the power storage devices is fully charged within the target period and the state in which the remaining power storage amounts of the power storage devices are increased to the target values by the scheduled departure times of the vehicles.

The scheduled departure time of each vehicle including the power storage device may be after an elapse of the target period. Each vehicle may be an electrified vehicle (xEV) that uses electric power as a power source in whole or in part. Examples of the xEV include battery electric vehicles (BEVs), plug-in hybrid electric vehicles (PHEVs), and fuel cell electric vehicles (FCEVs).

### Section 3

The energy management method according to section 2 may further have the following features. The reselecting the target resource may include selecting a power storage device having an earlier charging time limit as the target resource with priority from among the power storage devices. The charging time limit of the power storage device is a time earlier by a remaining charging period of the power storage device than the scheduled departure time of the vehicle including the power storage device. The remaining charging period of the power storage device is a period required to increase the remaining power storage amount of the power storage device to a target value.

By selecting the power storage device having the earlier charging time limit as the target resource with priority as described above, the charging is executed with priority from the power storage device closer to the time limit of charging to reach the target value of the remaining power storage amount by the scheduled departure time of the vehicle. This achieves both the state in which the remaining power storage amounts of the power storage devices do not reach the full charge amounts within the target period and the state in which the remaining power storage amounts are increased to the target values by the scheduled departure times of the vehicles.

### Section 4

The energy management method according to section 3 may further have the following features. The reselecting the target resource may include determining whether the remaining charging period of the target resource selected based on the charging time limit is equal to or shorter than a predetermined period, and reselecting the target resource from among the power storage devices when determination is made that the remaining charging period is equal to or shorter than the predetermined period.

By determining the reselection condition (reselection timing) for the target resource based on the remaining charging period as described above, the target resource is easily reselected from the power storage devices so that none of the power storage devices is fully charged within the target period.

### Section 5

The energy management method according to any one of sections 1 to 4 may further have the following features. The reselecting the target resource may include selecting a power storage device having the remaining power storage amount smaller than a predetermined first reference value as the target resource with priority from among the power storage devices, determining whether the remaining power storage amount of the target resource selected based on the remaining power storage amount is equal to or larger than a second reference value that is preset equal to or larger than the first reference value, and reselecting the target resource from among the power storage devices when determination is made that the remaining power storage amount is equal to or larger than the second reference value.

According to the above method, the remaining power storage amount corresponding to at least the first reference value is easily secured in each of the power storage devices within the target period. Thus, it is easier to use each of the power storage devices for a predetermined purpose after the elapse of the target period.

### Section 6

The energy management method according to any one of sections 1 to 5 may further have the following features. The energy management method may further include canceling the suppression of the state in which the target charging amount is reached when a difference between a charging and discharging amount outputtable during the target period in a vehicle group and a charging and discharging amount necessary during the target period in the vehicle group is equal to or larger than a predetermined value. Vehicles included in the vehicle group may include the power storage devices.

### Section 7

The energy management method according to any one of sections 1 to 6 may further have the following features. The energy management method may further include canceling the suppression of the state in which the target charging amount is reached when a value obtained by dividing a charging and discharging amount outputtable during the target period in a vehicle group by a charging and discharging amount necessary during the target period in the vehicle group is equal to or larger than a predetermined value. Vehicles included in the vehicle group may include the power storage devices.

### Section 8

The energy management method according to any one of sections 1 to 7 may further have the following features. The energy management method may further include canceling the suppression of the state in which the target charging amount is reached when a difference between a charging and discharging output outputtable during the target period in a vehicle group and a charging and discharging output necessary during the target period in the vehicle group is equal to or larger than a predetermined value. Vehicles included in the vehicle group may include the power storage devices.

### Section 9

The energy management method according to any one of sections 1 to 8 may further have the following features. The energy management method may further include canceling the suppression of the state in which the target charging amount is reached when a value obtained by dividing a charging and discharging output outputtable during the target period in a vehicle group by a charging and discharging output necessary during the target period in the vehicle group is equal to or larger than a predetermined value. Vehicles included in the vehicle group may include the power storage devices.

In the energy management method according to any one of sections 6 to 9, the process of suppressing the state in which each of the power storage devices reaches the target charging amount within the target period can be canceled when the predetermined cancellation condition is satisfied. The cancellation condition is set so as to be satisfied in a situation in which the necessity of the suppression process is low or in a situation in which the suppression process is unnecessary.

According to another aspect, there is provided a storage medium storing a program that causes a computer to execute the energy management method according to any one of sections 1 to 9. In one aspect, there is provided a computer device including the storage medium storing the program, and a processor configured to execute the program stored in the storage medium. In another aspect, there is provided a computer device configured to distribute the program.

According to the present disclosure, it is possible to suppress the decrease in the maximum charging power of the power storage devices in the energy management using the power storage devices.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a schematic configuration of an energy management system according to an embodiment of the present disclosure;
FIG. 2 illustrates an outline of tertiary balancing power 2;
FIG. 3 illustrates a process to be executed by a server (computer device) to operate a vehicle group as a balancing power for a power grid;
FIG. 4 is a flowchart showing an energy management method according to the embodiment of the present disclosure;
FIG. 5 is a flowchart showing details of a process related to target resource selection shown in FIG. 4;
FIG. 6 is a time chart showing a first example of SOC transition of each resource when energy management is executed by the method shown in FIGS. 4 and 5;
FIG. 7 is a time chart showing a second example of the SOC transition of each resource when the energy management is executed by the method shown in FIGS. 4 and 5;
FIG. 8 is a time chart showing a third example of the SOC transition of each resource when the energy management is executed by the method shown in FIGS. 4 and 5; and FIG. 9 is a flowchart showing a modification of the process shown in FIG. 5.

### DETAILED DESCRIPTION OF EMBODIMENTS

An embodiment of the present disclosure will be described in detail with reference to the drawings. In the drawings, the same or corresponding parts are denoted by the same reference signs and the description thereof will not be repeated.

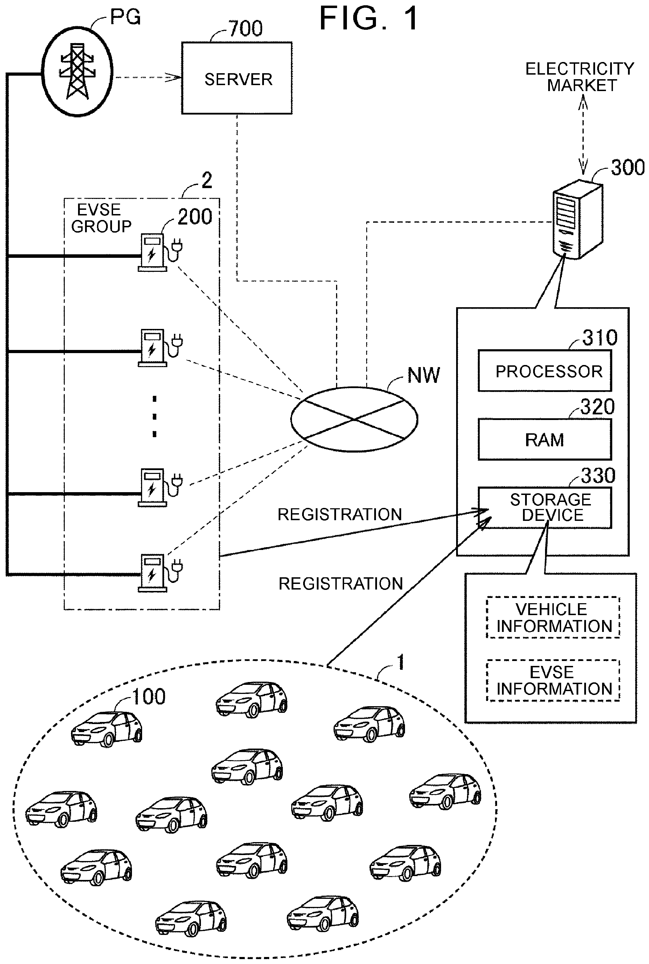

FIG. 1 shows a schematic configuration of an energy management system according to the embodiment of the present disclosure. As shown in FIG. 1, the energy management system according to the present embodiment executes energy management for a power grid PG. The energy management system includes a vehicle group 1, an EVSE group 2, and servers 300, 700. EVSE stands for electric vehicle supply equipment.

The power grid PG is an electrical network formed by power transmission and distribution equipment. A plurality of power plants is connected to the power grid PG. Electric power is supplied from the power plants to the power grid PG. The vehicle group 1 includes a plurality of electrified vehicles (xEV) that can operate as balancing powers for the power grid PG. The EVSE group 2 includes a plurality of EVSE units that is supplied with electric power from the power grid PG. Each EVSE unit in the EVSE group 2 is connected to a communication network NW via, for example, a communication line. The communication network NW is, for example, a wide area network constructed by the Internet and wireless base stations.

The server 700 corresponds to a computer belonging to a transmission system operator (TSO) of the power grid PG. The server 300 corresponds to a computer belonging to an aggregator. Each of the servers 300, 700 is connected to the communication network NW via, for example, a communication line. The servers 300, 700 are configured to communicate with each other.

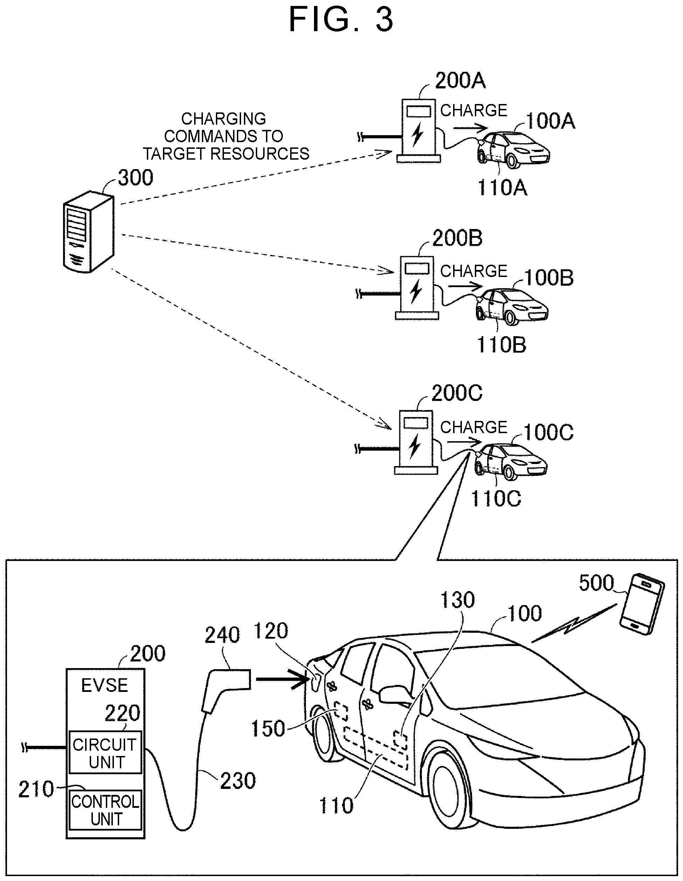

As the server 300, a computer including a processor 310, a random-access memory (RAM) 320, and a storage device 330 can be adopted. The server 300 has a clock function. The server 300 may further include a human-machine interface (HMI) (not shown). The HMI may be a touch panel display. For example, a central processing unit (CPU) can be adopted as the processor 310. The storage device 330 is configured to save stored information. The storage device 330 may include a rewritable non-volatile memory. In the server 300, the processor 310 executes programs stored in the storage device (storage medium) 330 to execute various processes (see, for example, FIGS. 3 to 8 described later). However, the various processes need not necessarily be executed by software, and may be executed by dedicated hardware (electronic circuit).

Identification information (vehicle ID) of each vehicle included in the vehicle group 1 is preregistered in the server 300. Hereinafter, each vehicle included in the vehicle group 1 will be referred to as "vehicle 100" unless the vehicles included in the vehicle group 1 are distinguished. The storage device 330 of the server 300 stores information about the vehicle 100 (hereinafter also simply referred to as "vehicle information") distinguished by the vehicle ID. The vehicle information includes specifications of the vehicle 100 (for example, rated charging power), information indicating whether the vehicle 100 is electrically connected to the power grid PG (plugged-in state), and information about the vehicle 100 in the plugged-in state. Examples of the information about the vehicle 100 in the plugged-in state include the remaining power storage amount, a scheduled departure time, and a target charging value.

In the present embodiment, the vehicle 100 connected to the EVSE 200 (vehicle 100 in the plugged-in state) communicates with the server 300 via the EVSE 200. Thus, the server 300 acquires information about the vehicle 100. A user can set a scheduled departure time and a target charging value for the vehicle 100 through a user terminal 500 shown in FIG. 3 described later. The scheduled departure time corresponds to a time at which the vehicle 100 is scheduled to start traveling next time (that is, a time at which the vehicle 100 is scheduled to make transition from a parked state to a traveling state). The target charging value in the present embodiment corresponds to a target value of the remaining power storage amount at the scheduled departure time, and can be represented by an SOC value. Hereinafter, the SOC value indicating the target charging value will be referred to as "target SOC". The state of charge (SOC) indicates the remaining power storage amount, and represents, for example, the ratio of a current power storage amount to a fully charged power storage amount from 0% to 100%.

Identification information (EVSE-ID) of each EVSE unit included in the EVSE group 2 is preregistered in the server 300. Hereinafter, each EVSE unit included in the EVSE group 2 will be referred to as "EVSE 200" unless the EVSE units included in the EVSE group 2 are distinguished. The storage device 330 of the server 300 stores information about the EVSE 200 (hereinafter also simply referred to as "EVSE information") distinguished by the EVSE-ID. The EVSE information includes specifications of the EVSE 200 (for example, rated supply power), a communication address of the EVSE 200, and the position of the EVSE 200 (for example, latitude and longitude).

The server 300 is configured to bundle a plurality of distributed energy resources (hereinafter also referred to as "DER") to realize a virtual power plant (VPP). The VPP is a scheme in which the DERs are controlled remotely and integrally to function as if they were a single power plant. For example, the vehicle 100 electrically connected to the EVSE 200 can function as the DER for the VPP. Therefore, the server 300 causes the vehicle 100 electrically connected to the EVSE 200 to execute energy management for the power grid PG in response to, for example, a request from the server 700 (TSO). The server 300 may bid for a balancing power requested by the TSO in the electricity market.

The server 300 automatically conducts trading (for example, bidding and contracting) in the electricity market in accordance with conditions (for example, bidding conditions) predetermined by the user, and manages books (trading records) about electricity trading. The server 300 may also make payments for electricity trading. Tertiary balancing power 2 will be described below as an example of the balancing power for bidding in the electricity market.

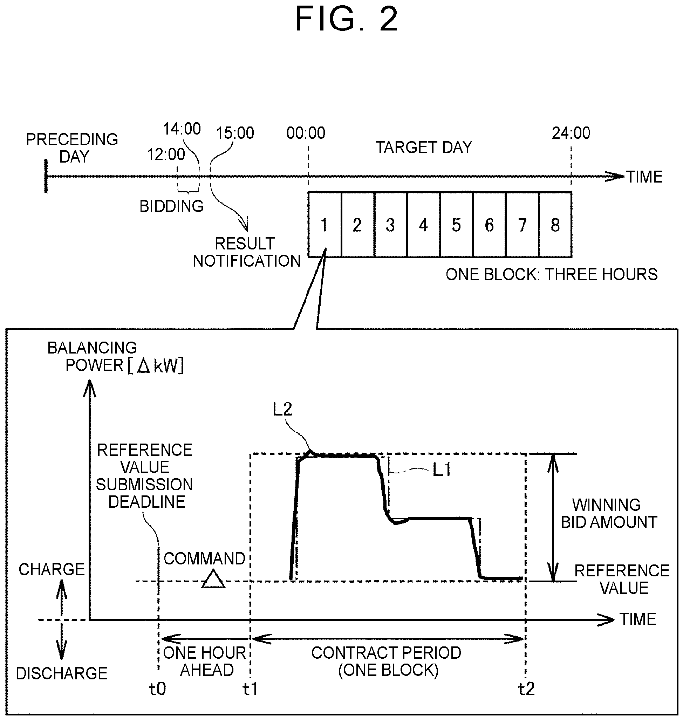

FIG. 2 illustrates an outline of the tertiary balancing power 2. As shown in FIG. 2 together with FIG. 1, the tertiary balancing power 2 is a balancing power for a special system that is feed-in tariff (FIT), and is traded in the supply and demand balancing market. In the supply and demand balancing market, electric power is traded as a product. Each product is bought and sold by, for example, bidding. The tertiary balancing power 2 corresponds to replacement reserve for feed-in tariff (RR-FIT). The response period is within 45 minutes and the duration is three hours (six frames). In the supply and demand balancing market, the tertiary balancing power 2 is traded for eight blocks that segment one day in units of three hours.

Under the FIT system, the TSO is responsible for imbalances in power generation plans. The TSO predicts the renewable energy output two days before the target block and determines a planned power generation value. On a day before the target block, the TSO procures the tertiary balancing power 2 for eliminating the renewable energy prediction deviation (prediction deviation from the value two days before the target block). The renewable energy means energy that can be obtained from renewable resources.

The server 300 makes a bid in the supply and demand balancing market during a period from 12:00 to 14:00 on the day before the target block. Specifically, the server 300 transmits bidding information (that is, information indicating bidding conditions) including a product (for example, tertiary balancing power 2), a block (any one of the eight blocks), and a bidding amount (ΔkW) to a supply and demand balancing market system. Then, the server 300 is notified about a result at 15:00 on the bid date. When the bid product is awarded, a contract is concluded. The ΔkW contract amount corresponds to a winning bid amount.

An entity that has won a bid for the tertiary balancing power 2 in the supply and demand balancing market (winning bidder) owes a duty (contract duty) to balance electric power within a range of the winning bid amount (hereinafter referred to also as "winning bid range") set with respect to a reference value (kW). In the present embodiment, the server 300 bids for the tertiary balancing power 2. When the bid product is awarded, the server 300 registers a reference value in the supply and demand balancing market system before predetermined time t0 (for example, one hour before the start time of the target block of the winning bid). Time t0 corresponds to a reference value submission deadline. The example shown in FIG. 2 is an example in which a charging-side balancing power has been awarded. In this example, a charging-side reference value is registered. The server 300 receives, sequentially from the server 700, target values arbitrarily requested by the server 700 (for example, a target value L1 shown in FIG. 2) within the winning bid range in the target block of the winning bid (for example, a contract period t1 to t2 shown in FIG. 2).

In the present embodiment, the server 300 selects a plurality of vehicles (for example, vehicles 100A to 100C described later) to be allocated during the contract period t1 to t2 from the vehicle group 1. Each selected vehicle maintains the plugged-in state during the contract period t1 to t2. The server 300 selects one or more vehicles from among the vehicles in the plugged-in state as target resources (control targets) during the contract period t1 to t2, and controls the selected target resources to execute energy management for the power grid PG. Specifically, the server 300 executes charging control on the target resources so that actual charging power (actual value L2) of the target resources follows target charging power (target value L1) from the server 700 during the contract period t1 to t2. The difference between the reference value (kW) and the actual value L2 (kW) corresponds to the balancing power (ΔkW) for the power grid PG provided by the target resources.

The server 300 transmits command values to the target resources based on the target value L1. When the target value L1 is changed within the contract period t1 to t2, the server 300 changes the actual value L2 to that value (changed target value L1) within the response period of the product requirement. When the target value L1 continues at the same value within the contract period t1 to t2, the server 300 maintains the actual value L2 at the target value L1 at least for the duration of the product requirement. After the contract period t1 to t2 has ended, the server 300 transmits actual data (actual value L2) during the contract period t1 to t2 to the server 700 (TSO server). The TSO checks that the winning bidder maintains a state in which the ΔkW contract amount (winning bid amount) can be delivered during the contract period t1 to t2, and that the winning bidder is balancing electric power based on the target value L1 within the winning bid range (response record). When at least one of assessment of the delivery possibility of the ΔkW contract amount (Assessment I) and assessment of the response record (Assessment II) reveals nonconformity with the product requirement, a predetermined penalty charge is imposed on the winning bidder.

FIG. 3 illustrates a process to be executed by the server 300 to operate the vehicle group 1 as the balancing power for the power grid PG awarded in the electricity market.

First, description will be given of the configurations of the vehicle 100 included in the vehicle group 1 and the EVSE 200 included in the EVSE group 2. As shown in FIG. 3, the vehicle 100 includes a battery 110 and an electronic control unit (hereinafter referred to as "ECU") 150. The ECU 150 is, for example, a computer including a processor and a storage device. The vehicle 100 is an electrified vehicle (xEV) configured to travel by using electric power stored in the battery 110. The vehicle 100 may be a battery electric vehicle (BEV) that does not include an internal combustion engine, or a plug-in hybrid electric vehicle (PHEV) that includes an internal combustion engine. The battery 110 may be a known power storage device for vehicles (for example, a liquid secondary battery, an all-solid-state secondary battery, or an assembled battery). Examples of the secondary battery for vehicles include a lithium-ion battery and a nickel metal hydride battery.

The body of the EVSE 200 includes a control unit 210 and a circuit unit 220. The EVSE 200 further includes a charging cable 230 extending outward from the body of the EVSE 200. The charging cable 230 is electrically connected to the circuit unit 220. The control unit 210 includes a processor and a storage device, and controls the circuit unit 220 in response to a command from the server 300. The circuit unit 220 includes a circuit for supplying electric power to the vehicle 100 (charging the battery 110). The charging cable 230 includes a connector 240 (plug) at the tip.

The vehicle 100 further includes an inlet 120 configured such that the connector 240 can be connected to and disconnected from the inlet 120. The vehicle 100 is electrically connected to the EVSE 200 when the connector 240 of the charging cable 230 connected to the body of the EVSE 200 is connected to the inlet 120 of the parked vehicle 100 (hereinafter also referred to as "plugged-in state"). The vehicle 100 is not electrically connected to the EVSE 200, for example, while the vehicle 100 is traveling (hereinafter also referred to as "plugged-out state").

The EVSE 200 includes a connection detection circuit (not shown) that detects the state of the connector 240 (plugged-in state/plugged-out state). The connection detection circuit outputs the state of connector 240 to the control unit 210. The control unit 210 acquires, from sensors (not shown) included in the circuit unit 220, information indicating the operation status of the EVSE 200 (for example, input power from the power grid PG and output power to the vehicle 100). The information about the EVSE 200 is sequentially transmitted from the EVSE 200 to the server 300 during the operating period of the EVSE 200.

The EVSE 200 is electrically connected to the power grid PG. Therefore, the vehicle 100 in the plugged-in state is electrically connected to the power grid PG. When the battery 110 is charged in the plugged-in state, electric power is supplied from the power grid PG to the EVSE 200, the circuit unit 220 of the EVSE 200 converts the supplied electric power into electric power suitable for power supply to the vehicle 100, and the converted electric power is output to the connector 240 of the charging cable 230. In this case, the battery 110 is charged with the electric power input from the connector 240 to the inlet 120.

The vehicle 100 further includes a temperature adjustment device 130 that adjusts the temperature of the battery 110. The temperature adjustment device 130 includes, for example, a heater that heats the battery 110. However, the present disclosure is not limited to this, and the temperature adjustment device 130 may include an air sending device (for example, a fan or a blower) for cooling the battery 110 instead of or in addition to the heater. The temperature adjustment device 130 is controlled by the ECU 150. The ECU 150 causes the temperature adjustment device 130 to adjust the temperature of the battery 110 within a predetermined temperature range before the battery 110 is charged. In the present embodiment, the predetermined temperature range is a temperature range in which the battery 110 can fully exhibit its original charging performance (hereinafter also referred to as "charging range"). When the temperature of the battery 110 is outside the charging range, the charging power of the battery 110 may decrease.

The user terminal 500 is a mobile terminal possessed owned by the user of the vehicle 100. The user terminal 500 is configured to communicate with the vehicle 100. In the present embodiment, a smartphone including a touch panel display is adopted as the user terminal 500. The smartphone includes a built-in computer. However, the present disclosure is not limited to this, and any terminal can be adopted as the user terminal 500. For example, a laptop, a tablet terminal, a mobile game machine, a wearable device (smart watch, smart glasses, smart gloves, etc.), or an electronic key can also be adopted as the user terminal 500.

Next, a process related to the energy management to be executed by the server 300 will be described. In the present embodiment, the server 300 selects resources for the energy management from the vehicle group 1. For example, the server 300 transmits a signal for requesting the energy management (hereinafter also referred to as "VPP signal") to the user terminal 500 of the vehicle, and requests the user terminal 500 to reply with either acceptance or rejection. The VPP signal corresponds to a signal for implementing demand response (DR).

The VPP signal includes a vehicle restraint period (that is, a period during which the vehicle is restrained for the energy management). The restraint period corresponds to a period during which the energy management is executed, and is, for example, the contract period (balancing period of the awarded product) shown in FIG. 2. In the present embodiment, the restraint period corresponds to an example of a "target period" according to the present disclosure. Hereinafter, the restraint period will be referred to as "VPP period".

The VPP signal further includes information indicating an upper limit value of the remaining power storage amount at the start time of the VPP period (hereinafter referred to as "start SOC upper limit value"). When the VPP signal is received, the user terminal 500 displays the VPP period and the start SOC upper limit value. The vehicle user can select either acceptance or rejection by operating the user terminal 500. When the server 300 receives a reply with acceptance from the user terminal 500, the server 300 determines the vehicle as a resource. The user's reply with acceptance means that the user promises the aggregator to comply with the request indicated by the VPP signal (for example, the VPP period and the start SOC upper limit value). Therefore, the user of the vehicle 100 determined as the resource plugs in the vehicle 100 in which the SOC of the battery 110 is equal to or lower than the start SOC upper limit value by the start time of the VPP period, and maintains the plugged-in state of the vehicle 100 within the VPP period. That is, the scheduled departure time of the vehicle 100 determined as the resource is set after the VPP period. The VPP signal may further include incentive information, and the user terminal 500 may further display the incentive information. The server 300 may give an incentive (for example, cashable points) indicated by the VPP signal to the vehicle user who has fulfilled the promise (contract) with the aggregator. When the server 300 receives a reply with rejection from the user terminal 500, the server 300 does not select the vehicle as a resource.

The server 300 selects a necessary number of vehicles 100 for the energy management from the vehicle group 1 as described above. The server 300 determines the number of vehicles 100 necessary for the energy management based on, for example, the winning bid amount (FIG. 2), the vehicle information (FIG. 1), and the EVSE information (FIG. 1). Description will be given of an example in which the three vehicles 100A to 100C shown in FIG. 3 are selected as resources for the energy management.

Each of the vehicles 100A to 100C includes the battery 110, the inlet 120, the temperature adjustment device 130, and the ECU 150 as described above. The power storage devices (batteries 110) of the vehicles 100A, 100B, 100C will hereinafter be referred to as "battery 110A", "battery 110B", "battery 110C", respectively. The EVSE units 200 electrically connected to the vehicles 100A, 100B, 100C when the energy management for the power grid PG is executed will be referred to as "EVSE 200A", "EVSE 200B", "EVSE 200C", respectively. Each of the EVSE units 200A to 200C includes the control unit 210, the circuit unit 220, the charging cable 230, and the connector 240 as described above.

The server 300 executes the energy management within the VPP period by controlling target resources (control targets) that are one or more vehicles 100 selected from among the vehicles 100A to 100C (resources for energy management). Specifically, the server 300 executes charging control on the power storage devices (batteries 110) of the target resources to execute the energy management within the VPP period.

In the present embodiment, the server 300 controls the vehicles 100A, 100B, 100C via the EVSE units 200A, 200B, 200C, respectively. The server 300 transmits a command value for the vehicle to the corresponding EVSE (EVSE connected to the vehicle). The command value indicates charging power. The server 300 may determine the command value so that the actual value (total charging power of the batteries 110A to 110C) approaches the target value (requested value from the server 700).

In the plugged-in state, the control unit 210 of the EVSE 200 and the ECU 150 of the vehicle 100 execute wired communication via a communication line in the charging cable 230. In the EVSE 200, the circuit unit 220 charges the battery 110 in response to a command from the control unit 210. While the battery 110 is being charged, the control unit 210 receives the state of the battery 110 (for example, temperature, current, voltage, and SOC) from the ECU 150, and controls the circuit unit 220 so that the charging power approaches the target value (command value from the server 300).

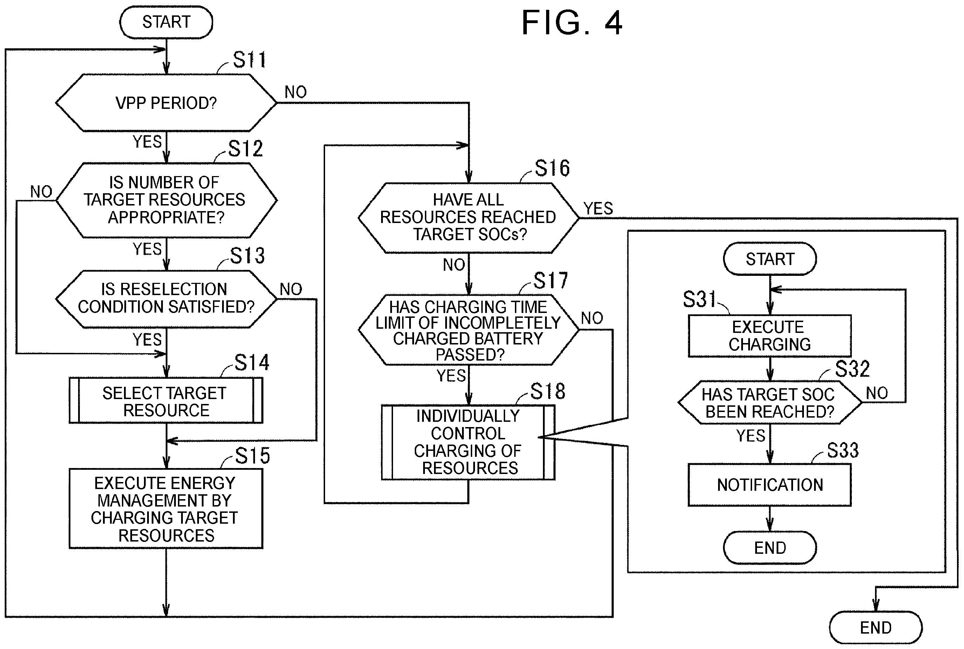

FIG. 4 is a flowchart showing an energy management method according to the present embodiment. The symbol "S" in the flowchart means a step. For example, the process shown in this flowchart is started by the server 300 when the server 300 has won a bid for a product (for example, balancing power) related to the energy management in the electricity market and then a time earlier by a predetermined period (for example, 30 minutes) than the start time of the contract period (VPP period) of the product has come.

As shown in FIG. 4 together with FIGS. 1 to 3, the server 300 determines in S11 whether the current time is within the VPP period. Before the VPP period, the determination is "NO" in S11, and the determination is also "NO" in S16 and S17 described later. Thus, the determination of S11 is repeated. When the start time of the VPP period has come, the determination is "YES" in S11, and the process proceeds to S12.

In the present embodiment, in each of the vehicles 100A to 100C, the ECU 150 causes the temperature adjustment device 130 to adjust the temperature of the battery 110 within the predetermined temperature range (for example, the charging range) before the VPP period. The ECU 150 controls the temperature adjustment device 130 so that the temperature of the battery 110 is maintained within the predetermined temperature range during the VPP period.

In S12, the server 300 determines whether the number of vehicles (the number of power storage devices) included in the target resources for the energy management (VPP) is appropriate based on a requested value (target charging power) from the server 700. When an appropriate number of vehicles for the target charging power have been selected as the target resources, the determination is "YES" in S12, and the process proceeds to S13. When the number of vehicles selected as the target resources is insufficient or excessive for the target charging power, the determination is "NO" in S12, and the process proceeds to S14. In the initial processing routine, the target resources have not yet been selected. Therefore, the determination is "NO" in S12, and the process proceeds to S14.

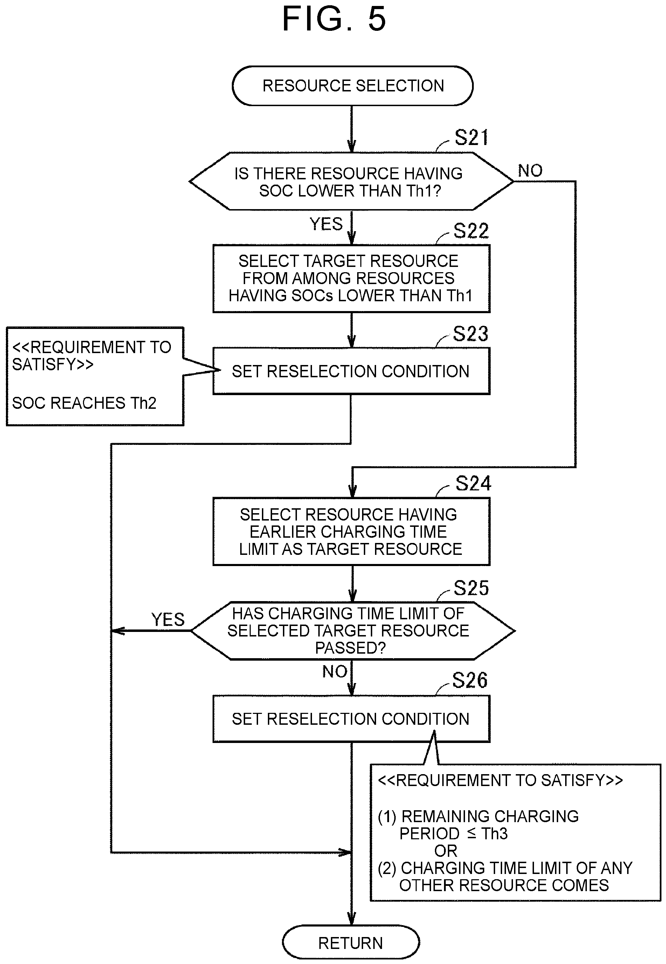

In S14, the server 300 selects, from among the vehicles 100A to 100C, a necessary number of vehicles to cover the target charging power as the target resources. More specifically, vehicles that are not the target resources among the vehicles 100A to 100C are set as selection candidates, and the server 300 selects the target resources from among the selection candidates. In the initial processing routine, none of the vehicles 100A to 100C is the target resource. Therefore, all the vehicles 100A to 100C are the selection candidates. FIG. 5 is a flowchart showing details of S14.

As shown in FIG. 5 together with FIGS. 1 to 3, the server 300 determines in S21 whether a vehicle 100 in which the SOC of the battery 110 is lower than a predetermined reference value (hereinafter referred to as "Th1") is present among the selection candidates. The vehicle 100 in which the SOC of the battery 110 is lower than Th1 will hereinafter be referred to as "low-SOC vehicle". The value Th1 is preset in a low SOC range (for example, a range of higher than 0% and lower than 50%). The value Th1 may be 5% or higher and 45% or lower, or may be 15% or higher and 35% or lower. The value Th1 corresponds to an example of a "first reference value" according to the present disclosure.

In the present embodiment, the same Th1 is set for all the vehicles 100A to 100C. However, the present disclosure is not limited to this, and Th1 may be a different value for each vehicle (for each power storage device). The user of each vehicle may set Th1 to the vehicle 100 through the user terminal 500.

When the low-SOC vehicle is present among the selection candidates (YES in S21), the server 300 selects the low-SOC vehicle as the target resource in S22. When a plurality of low-SOC vehicles is present among the selection candidates, the server 300 may select a low-SOC vehicle having the lowest SOC of the battery 110 as the target resource. When selecting a plurality of vehicles (resources) collectively as the target resources, the server 300 may select the vehicles (resources) in ascending order of the SOC of the battery 110.

In S23, the server 300 sets a reselection condition for the target resource (low-SOC vehicle) selected in S22. In the present embodiment, the server 300 sets a reselection condition that is satisfied when the SOC of the battery 110 mounted on the target resource (low-SOC vehicle) is equal to or higher than a predetermined reference value (hereinafter referred to as "Th2"). When the battery 110 of the target resource is charged and the SOC of the battery 110 reaches Th2, the reselection condition is satisfied. While the SOC of the battery 110 of the target resource is lower than Th2, the reselection condition is not satisfied. The value Th2 corresponds to an example of a "second reference value" according to the present disclosure.

The value Th2 is preset in the low SOC range (for example, the range of higher than 0% and lower than 50%). The value Th2 is equal to or higher than Th1. In the present embodiment, Th2 is set to the same value as Th1. However, the present disclosure is not limited to this, and Th2 may be a value higher than Th1. The value Th2 may be a different value for each vehicle (for each power storage device). The user of each vehicle may set Th2 to the vehicle 100 through the user terminal 500.

When the target resource and its reselection condition are determined by the processes of S22 and S23, the series of processes shown in FIG. 5 is terminated, and the process proceeds to S15 of FIG. 4.

When no low-SOC vehicle is present among the selection candidates (NO in S21), the server 300 selects a vehicle 100 having the earliest charging time limit of the battery 110 as the target resource from among the selection candidates in S24. When selecting a plurality of vehicles (resources) collectively as the target resources, the server 300 may select the vehicles (resources) in order from a vehicle having an earlier charging time limit of the battery 110.

The charging time limit of the battery 110 is a time earlier by the remaining charging period of the battery 110 than the scheduled departure time of the vehicle 100. The remaining charging period of the battery 110 is a period required to increase the SOC of the battery 110 to the target SOC. That is, the remaining charging period decreases as the SOC of the battery 110 approaches the target SOC. When the scheduled departure time of the vehicle 100 is constant, the charging time limit of the battery 110 is earlier as the remaining charging period of the battery 110 increases. When the remaining charging period of the battery 110 is constant, the charging time limit of the battery 110 is earlier as the scheduled departure time of the vehicle 100 is earlier.

Hereinafter, the target SOCs of the batteries 110A, 110B, 110C will be referred to as "Th4", "Th5", "Th6", respectively. Each of Th4 to Th6 is preset in a high SOC range (for example, a range of 70% or higher and 100% or lower). In the present embodiment, each of Th4 to Th6 is an SOC value indicating a fully charged state (100%). However, the present disclosure is not limited to this, and Th4 to Th6 may be different values.

In S25, the server 300 determines whether the charging time limit of the target resource selected in S24 has passed. When the charging time limit of the target resource selected in S24 has not come (NO in S25), the process proceeds to S26. In S26, the server 300 sets a reselection condition for the target resource selected in S24. In the present embodiment, the server 300 sets a reselection condition that is satisfied when any one of requirements is satisfied out of a requirement that the remaining charging period of the target resource is equal to or shorter than a predetermined period (hereinafter referred to as "Th3 ") (first requirement) and a requirement that the charging time limit of any one of the vehicles 100A to 100C has come (second requirement), and that is not satisfied when neither of the requirements is satisfied. The reselection condition set in S26 is satisfied when the remaining charging period of the target resource is Th3 or shorter, and thus is satisfied before the battery 110 of the target resource reaches the fully charged state. As Th3 increases, the charging capacity of the target resource when the remaining charging period of the target resource reaches Th3 or shorter (for example, the charging period until the power storage device is fully charged) increases. The value Th3 may be 15 minutes or longer and one hour or shorter, and may be about 30 minutes.

In the present embodiment, the same Th3 is set for all the vehicles 100A to 100C. However, the present disclosure is not limited to this, and Th3 may be a different value for each vehicle (for each power storage device). For example, the server 300 may determine Th3 for the vehicle based on the scheduled departure time of the vehicle.

When the process of S26 is executed, the series of processes shown in FIG. 5 is terminated, and the process proceeds to S15 of FIG. 4. When the charging time limit of the target resource selected in S24 has passed (YES in S25), the series of processes shown in FIG. 5 is terminated without executing the process of S26, and the process proceeds to S15 of FIG. 4. Since the reselection condition is not set for the target resource with its charging time limit passed, the charging is continued by the process of S15 described below until the VPP period ends.

As shown in FIG. 4 together with FIGS. 1 to 3, after the server 300 has selected the target resources by the process of S14, the server 300 charges the batteries 110 of the target resources in S15 to execute the energy management based on the requested value (target charging power) from the server 700. Specifically, the server 300 transmits a charging command to the EVSE associated with the target resource (at least one of the vehicles 100A to 100C) so that the actual charging power of the target resource approaches the target charging power from the server 700. In this way, the server 300 charges the power storage devices (at least one of the batteries 110A to 110C) of one or more vehicles included in the target resources by the remote control (see FIG. 3).

When the process of S15 is executed, the process returns to the initial step (S11). The processes of S11 to S15 are repeated during the VPP period. In the second and subsequent processing routines, the server 300 determines in S12 whether the number of vehicles included in the target resources is sufficient based on whether the maximum charging power of the target resources (upper limit power that can charge the target resources) is equal to or greater than the target charging power. The maximum charging power of the target resources increases as the number of vehicles selected as the target resources increases. When all the vehicles 100A to 100C are selected as the target resources, the total value of the rated charging powers of the batteries 110A to 110C corresponds to the maximum charging power of the target resources.

When the maximum charging power of the target resources is smaller than the target charging power, it means that the number of vehicles selected as the target resources is insufficient. In this case, the determination is "NO" in S12, and the target resource is added by the process of S14 (see FIG. 5). Specifically, the server 300 selects, from among the vehicles 100A to 100C that are not the target resources, a necessary number of vehicles to cover the target charging power as the target resources. When the target charging power cannot be covered unless all the vehicles 100A to 100C are selected as the target resources, the server 300 selects all the vehicles 100A to 100C as the target resources.

In S12, the server 300 determines whether the number of vehicles included in the target resources is excessive based on whether the maximum charging power of the target resources is equal to or greater than the target charging power even when the number of vehicles included in the target resources is reduced. When the number of vehicles included in the target resources is excessive, the determination is "NO" in S12, and the target resources are reselected by the process of S14 (see FIG. 5). Specifically, none of the vehicles 100A to 100C are set as the target resources, and the server 300 selects a necessary number of vehicles to cover the target charging power as the target resources from among the vehicles 100A to 100C again by the process of S14 (see FIG. 5).

When the number of vehicles included in the target resources is appropriate (YES in S12), the server 300 determines in S13 whether the reselection condition for the target resource is satisfied. The reselection condition is set for each vehicle selected as the target resource by the process of FIG. 5. Therefore, when the target resources include a plurality of vehicles, the server 300 determines whether the reselection conditions are satisfied for the individual vehicles.

When the reselection condition for any target resource is satisfied (YES in both S12 and S13), the target resource is reselected in S14 even though the number of vehicles selected as the target resources (and thus the charging power of the target resources) is appropriate. Specifically, the vehicle with its reselection condition satisfied ceases to be the target resource. The server 300 reselects the target resource from among the vehicles 100A to 100C that are not the target resources (including the vehicle with its reselection condition satisfied) by the process of S14 (see FIG. 5).

In the present embodiment, when the vehicles 100A to 100C include vehicles with a small remaining power storage amount (when the energy management has just started), the vehicles with the small remaining power storage amount are selected as the target resources with priority (S21 to S23 in FIG. 5). When the remaining charging period of at least one of the batteries 110A to 110C reaches Th3 or shorter by charging the power storage device (at least one of the batteries 110A to 110C) of the target resource, the target resource is reselected. In the present embodiment, the reselection condition is satisfied before each of the batteries 110A to 110C reaches the fully charged state, and the target resource is reselected. This suppresses a state in which each of the batteries 110A to 110C reaches the target charging amount (for example, the fully charged state). In the reselection of the target resource, the vehicle (power storage device) having an earlier charging time limit is selected as the target resource with priority (S24 in FIG. 5). Thus, the SOC of the battery 110 easily increases to the target value (target SOC) by the scheduled departure time for each of the vehicles 100A to 100C.

When the charging time limit of any vehicle included in the target resources has come, the vehicle (whose charging time limit has come) is selected as the target resource by reselecting the target resource (S24 in FIG. 5). Even if the charging of the battery 110 started at the charging time limit continues until the end time of the VPP period, the battery 110 is not fully charged at the end time of the VPP period. The charging continues even after the VPP period by a process of S31 described later, and the SOC of the battery 110 reaches the target SOC at the scheduled departure time after the elapse of the VPP period. Thus, according to the processes shown in FIGS. 4 and 5, the charging control based on the target SOC is easily executed on each of the vehicles 100A to 100C.

When the VPP period has elapsed (NO in S11), the server 300 determines in S16 whether the SOCs of all the batteries 110A to 110C have reached the target SOCs. The battery 110 having an SOC lower than the target SOC will hereinafter be referred to as "incompletely charged battery".

When the batteries 110A to 110C include the incompletely charged battery (NO in S16), the server 300 determines in S17 whether the charging time limit of the incompletely charged battery has passed. When the charging time limit of the incompletely charged battery has not come (NO in S17), the process returns to S11, and the determination is "NO" again in S16. Therefore, the determination of S17 is repeated until the charging time limit of the incompletely charged battery comes. When a plurality of incompletely charged batteries is present, the determination of S17 is made for the individual incompletely charged batteries.

When the charging time limit of the incompletely charged battery has come (YES in S17), the server 300 transmits, in S18, an instruction signal for starting charging control to increase the SOC of the incompletely charged battery to the target SOC (hereinafter referred to as "charging start command") to the vehicle (one of the vehicles 100A to 100C) including the incompletely charged battery.

When the charging start command is received, the ECU 150 of the vehicle starts a process related to the charging control (series of processes of S31 to S33). In S31, the ECU 150 executes charging of the battery 110 (incompletely charged battery). In S32, the ECU 150 determines whether the SOC of the battery 110 is equal to or higher than the target SOC. While the SOC of the battery 110 has not reached the target SOC (NO in S32), the ECU 150 executes the charging of the battery 110 in S31. When the SOC of the battery 110 has reached the target SOC (YES in S32), the ECU 150 transmits, in S33, a signal indicating that the charging of the battery 110 has been completed (hereinafter referred to as "charging completion notification") to the server 300. When the process of S33 is executed, the charging control (series of processes of S31 to S33) by the vehicle that has received the charging start command is terminated. When the charging completion notification is received from the vehicle, the server 300 determines that the charging of the incompletely charged battery of the vehicle has been completed.

After the server 300 has transmitted the charging start command (S18), the process returns to S16. When all the SOCs of the batteries 110A to 110C have reached the target SOCs by executing the process related to the charging control (series of processes of S31 to S33) for all the incompletely charged batteries, the determination is "YES" in S16, and the series of processes shown in FIG. 4 is terminated.

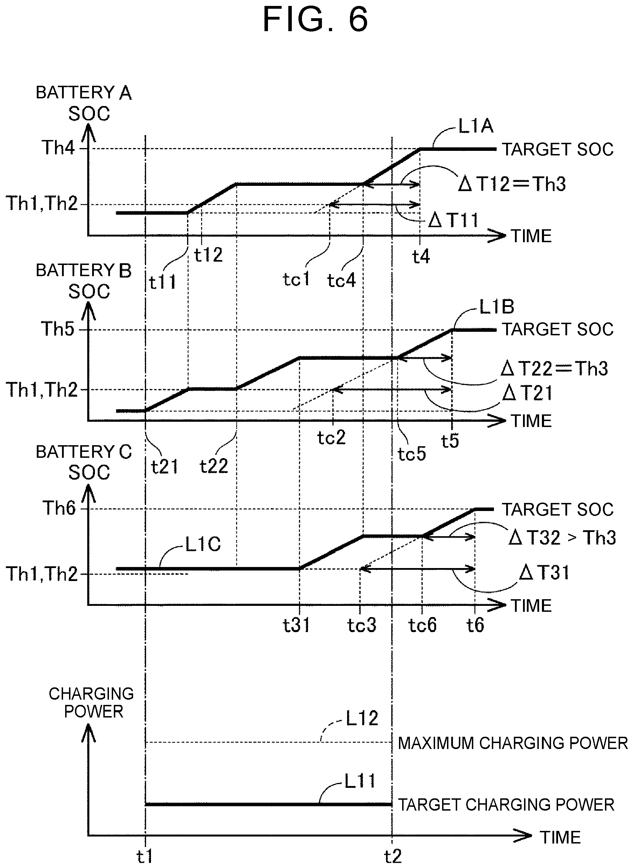

FIG. 6 is a time chart showing a first example of SOC transition of each resource when the energy management is executed by the method shown in FIGS. 4 and 5. In FIG. 6, lines L1A, L1B, L1C indicate SOC transitions of the batteries 110A, 110B, 110C, respectively. In the example shown in FIG. 6, the requested value (target charging power) from the server 700 is constant within the VPP period (contract period t1 to t2) as indicated by line L11. The target charging power can be covered by one vehicle 100 (one battery 110).

Referring to FIG. 6, when the VPP period is started in this example, the vehicle 100B is selected as the target resource at t21 (= 11) (S22 in FIG. 5), and the battery 110B is charged (S15 in FIG. 4). At 11, the vehicles 100A, 100B correspond to low-SOC vehicles, and the SOC of the battery 110B is lower than the SOC of the battery 110A.

When the SOC of the battery 110B has reached Th2 (= Th1) at t11, the reselection condition (S23 in FIG. 5) of the vehicle 100B is satisfied, and the target resource is reselected (FIG. 5). Therefore, the vehicle 100A is selected as the target resource at t11 (S22 in FIG. 5), and the battery 110A is charged instead of the battery 110B. At 111, only the vehicle 100A corresponds to the low-SOC vehicle. When the SOC of the battery 110A has reached Th2 at t12, the reselection condition (S23 in FIG. 5) of the vehicle 100A is satisfied, and the target resource is reselected (FIG. 5). The vehicle 100A is reselected as the target resource (S24 in FIG. 5), and the charging of the battery 110A is continued. The charging time limits and the remaining charging periods of the vehicles 100A, 100B, 100C at t12 are tc1, tc2, tc3 and ΔT11, ΔT21, ΔT31, respectively. Among tc1 to tc3, tc1 (charging time limit of the vehicle 100A) is earliest.

When the remaining charging period (ΔT12) of the battery 110A is equal to or shorter than Th3 at t22, the reselection condition (S26 in FIG. 5) for the vehicle 100A is satisfied, and the target resource is reselected (FIG. 5). Therefore, the vehicle 100B is selected as the target resource at t22 (S24 in FIG. 5), and the battery 110B is charged instead of the battery 110A. The charging time limits of the vehicles 100A, 100B, 100C at t22 are tc4, tc2, tc3, respectively. Among tc2 to tc4, tc2 (charging time limit of the vehicle 100B) is earliest.

When the remaining charging period (ΔT22) of the battery 110B is equal to or shorter than Th3 at t31, the reselection condition (S26 in FIG. 5) for the vehicle 100B is satisfied, and the target resource is reselected (FIG. 5). Therefore, the vehicle 100C is selected as the target resource at t31 (S24 in FIG. 5), and the battery 110C is charged instead of the battery 110B. The charging time limits of the vehicles 100A, 100B, 100C at t31 are tc4, tc5, tc3, respectively. Among tc3 to tc5, tc3 (charging time limit of the vehicle 100C) is earliest.

When the charging time limit (tc4) of the vehicle 100A has come, the reselection condition (S26 in FIG. 5) for the vehicle 100C is satisfied, and the target resource is reselected (FIG. 5). Therefore, the vehicle 100A is selected as the target resource at tc4 (S24 in FIG. 5), and the battery 110A is charged instead of the battery 1 10C. The charging of the battery 110A is continued until the SOC of the battery 110A reaches the target SOC (Th4) (that is, until scheduled departure time t4 of the vehicle 100A) (S15 and S31 in FIG. 4). The charging time limits of the vehicles 100A, 100B, 100C at tc4 are tc4, tc5, tc6, respectively. Among tc4 to tc6, tc4 (charging time limit of the vehicle 100A) is earliest.

When the charging time limit (tc5) of the vehicle 100B comes after the VPP period has elapsed (after t2), the battery 110B is charged in parallel with the charging of the battery 110A. The charging of the battery 110B is continued until the SOC of the battery 110B reaches the target SOC (Th5) (that is, until scheduled departure time t5 of the vehicle 100B) (S31 in FIG. 4). When the charging time limit (tc6) of the vehicle 100C has come, the battery 110C is further charged. The charging of the battery 110C is continued until the SOC of the battery 110C reaches the target SOC (Th6) (that is, until scheduled departure time t6 of the vehicle 100C) (S31 in FIG. 4). Thus, in the example shown in FIG. 6, the remaining power storage amounts of the batteries 110A, 110B, 110C increase to the target values (Th4, Th5, Th6) by the scheduled departure times of the vehicles 100A, 100B, 100C.

In the example shown in FIG. 6, none of the batteries 110A, 110B, 110C are fully charged but they are chargeable during the VPP period. Therefore, during the VPP period, as indicated by line L12, the maximum charging power of the batteries 110A to 110C corresponds to the total value of the rated charging powers of the batteries 110A to 110C.

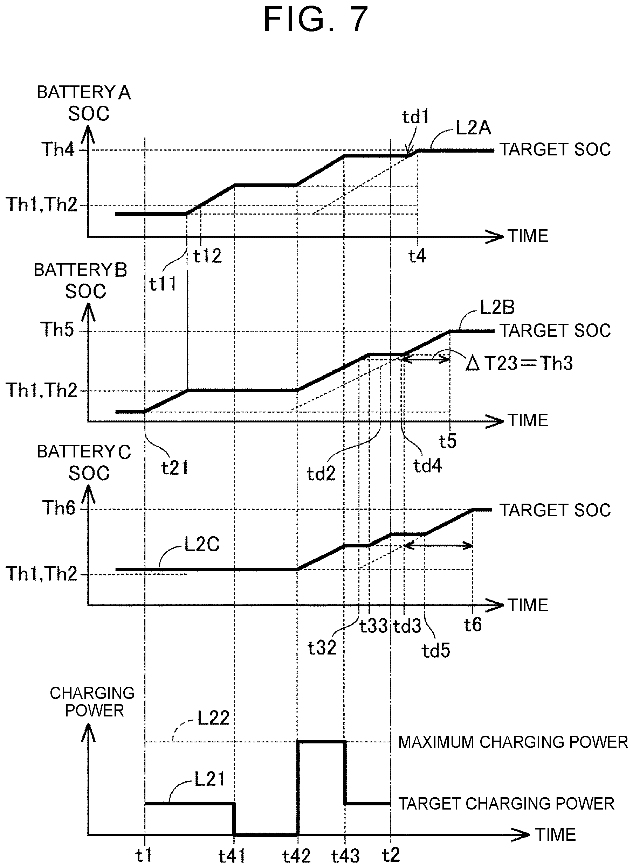

FIG. 7 is a time chart showing a second example of the SOC transition of each resource when the energy management is executed by the method shown in FIGS. 4 and 5. In FIG. 7, lines L2A, L2B, L2C indicate SOC transitions of the batteries 110A, 110B, 110C, respectively. In the example shown in FIG. 7, the requested value (target charging power) from the server 700 changes within the VPP period (contract period t1 to t2) as indicated by line L21. The target charging power in each of periods t1 to t41 and t43 to t2 can be covered by one vehicle 100 (one battery 110), and the target charging power in period t42 to t43 can be covered by three or more vehicles 100 (three or more batteries 110).

Referring to FIG. 7, this example is the same as the example shown in FIG. 6 from t1 (t21) to t12. At t12, the vehicle 100A is reselected as the target resource, and the charging of the battery 110A is continued. In the example shown in FIG. 7, the target charging power is zero from t41 to t42 (line L21). Therefore, none of the batteries 110A to 110C is charged during the period from t41 to t42. When the target charging power has reached a value at which the charging of the three batteries 110 is requested at t42, determination is made that the number of target resources is insufficient (NO in S12 of FIG. 4), and the vehicles 100B and 100C are selected as the target resources in addition to the vehicle 100A (S14 in FIG. 4).

When the target charging power has decreased at t43 (line L21), determination is made that the number of target resources is excessive (NO in S12 of FIG. 4), and the target resources are reselected (FIG. 5). Therefore, the vehicle 100B is selected as the target resource at t43 (S24 in FIG. 5), and only the battery 110B is charged instead of the charging of the batteries 110A to 110C. The charging time limits of the vehicles 100A, 100B, 100C at t43 are td1, td2, td3, respectively. Among td1 to td3, td2 (charging time limit of the vehicle 100B) is earliest.

When the remaining charging period (ΔT23) of the battery 110B is equal to or shorter than Th3 at t32, the reselection condition (S26 in FIG. 5) for the vehicle 100B is satisfied, and the target resource is reselected (FIG. 5). The vehicle 100B is reselected as the target resource, and the charging of the battery 110B is continued. The charging time limits of the vehicles 100A, 100B, 100C at t32 are td1, td4, td3, respectively. Among td1, td3, and td4, td4 (charging time limit of the vehicle 100B) is earliest. As the battery 110B is charged, the remaining charging period of the battery 110B decreases. At a timing (t33) when the charging time limit of the vehicle 100B is later than td3, the vehicle 100C is selected as the target resource (S24 in FIG. 5), and the battery 110C is charged instead of the battery 110B.

When the end time (t2) of the VPP period has come, the charging of the battery 110C is temporarily stopped. When the charging time limits (td1, td4, td5) of the vehicles 100A, 100B, 100C have come, the batteries 110A, 110B, 110C are charged (S31 in FIG. 4). As described above, in the example shown in FIG. 7, none of the batteries 110A, 110B, 110C are fully charged but they are chargeable during the VPP period (line L22). Therefore, even when the target charging power increases in the latter half of the VPP period (t42), the batteries 110A to 110C can be charged based on the target charging power.

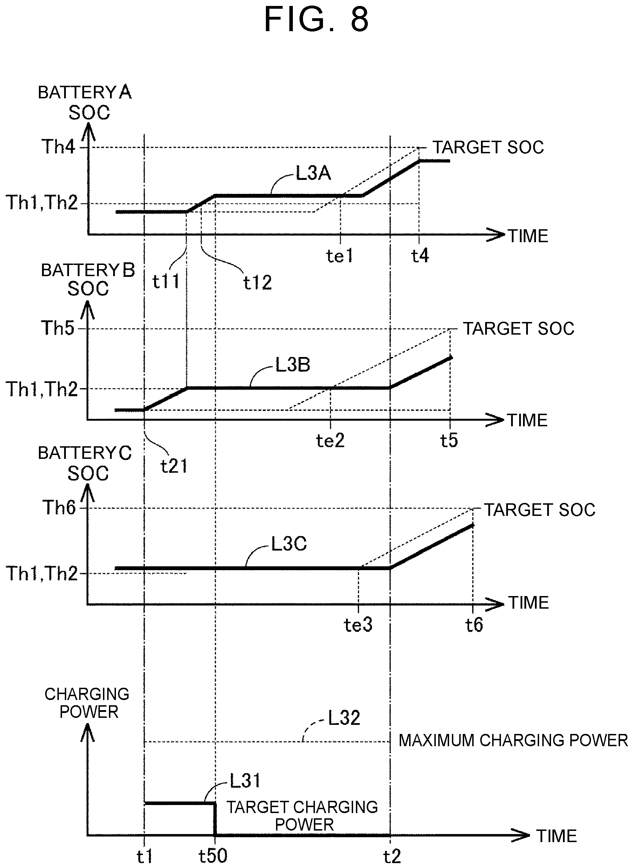

FIG. 8 is a time chart showing a third example of the SOC transition of each resource when the energy management is executed by the method shown in FIGS. 4 and 5. In FIG. 8, lines L3A, L3B, L3C indicate SOC transitions of the batteries 110A, 110B, 110C, respectively. In the example shown in FIG. 8, the requested value (target charging power) from the server 700 indicates that the charging is requested only in the first part (period t1 to t50) of the VPP period (contract period t1 to t2) as indicated by line L31.

Referring to FIG. 8, this example is the same as the example shown in FIG. 6 from t1 (t21) to t12. At t12, the vehicle 100A is reselected as the target resource, and the charging of the battery 110A is continued. In the example shown in FIG. 8, the target charging power is zero after t50 (line L31). Therefore, none of the batteries 110A to 110C is charged during the period from t50 to t2. When the end time (t2) of the VPP period has come, the charging of the batteries 110A, 110B, 110C is started simultaneously (S31 in FIG. 4). The charging time limits of the vehicles 100A, 100B, 100C at t2 are te1, te2, te3, respectively, and all the charging time limits have already passed at t2. In the example shown in FIG. 8, the remaining power storage amounts of the batteries 110A, 110B, 110C do not increase to the target values (Th4, Th5, Th6) by the scheduled departure times of the vehicles 100A, 100B, 100C. During the VPP period, however, the battery 110 having the remaining power storage amount equal to or smaller than Th1 (S22 in FIG. 5) and the battery 110 having an earlier charging time limit (S24 in FIG. 5) are selected as the target resources with priority. This suppresses a state in which each of the batteries 110A, 110B, 110C reaches the target charging amount within the VPP period, and the remaining power storage amounts of the batteries 110A, 110B, 110C at the scheduled departure times (t4, t5, t6) are close to the target values (Th4, Th5, Th6). Also in the example shown in FIG. 8, none of the batteries 110A, 110B, 110C are fully charged but they are chargeable during the VPP period (line L32).

As described above, the energy management method according to the present embodiment includes the processes shown in FIGS. 4 and 5. Specifically, the energy management method includes determining whether the current time is within the target period (VPP period) (S11 in FIG. 4), and executing the energy management within the target period by the target resources selected from among the power storage devices (batteries 110A, 110B, 110C) (S12 to S15 in FIG. 4). The executing the energy management includes charging the target resources to execute the energy management within the target period (S15 in FIG. 4), and reselecting the target resources from among the power storage devices to suppress a state in which each of the power storage devices reaches the target charging amount within the target period (S14 in FIG. 4 and FIG. 5).

The reselecting the target resources includes selecting a power storage device having the remaining power storage amount smaller than the predetermined first reference value (Th1) as the target resource with priority from among the power storage devices (S22 in FIG. 5), determining whether the remaining power storage amount of the target resource selected based on the remaining power storage amount is equal to or larger than the second reference value (Th2) that is preset equal to or larger than the first reference value (Th1) (S13 in FIG. 4, S23 in FIG. 5), reselecting the target resource from among the power storage devices (S14 in FIG. 4) when determination is made that the remaining power storage amount is equal to or larger than the second reference value (Th2) (YES in S13 of FIG. 4), selecting a power storage device having an earlier charging time limit as the target resource with priority from among the power storage devices (S24 in FIG. 5), determining whether the remaining charging period of the target resource selected based on the charging time limit is equal to or shorter than the predetermined period (Th3) (S13 in FIG. 4, S26 in FIG. 5), and reselecting the target resource from among the power storage devices (S14 in FIG. 4) when determination is made that the remaining charging period is equal to or shorter than the predetermined period (Th3) (YES in S13 of FIG. 4).

According to the above method, it is possible to suppress the decrease in the maximum charging power of the power storage devices in the energy management using the power storage devices. For example, the winning bid amount is easily secured during the contract period (see FIG. 2).

The processes shown in FIGS. 4 and 5 can be changed as appropriate. For example, S21 to S23 may be omitted. The process of S24 may be changed so that the target resources are selected in order from a resource having an earlier scheduled departure time instead of an earlier charging time limit. The reselection condition can be changed as appropriate. For example, the process of S26 may be changed so that a reselection condition that requires an increase in the remaining power storage amount of the target resource by a predetermined amount is set instead of the first requirement. The second requirement may be omitted.

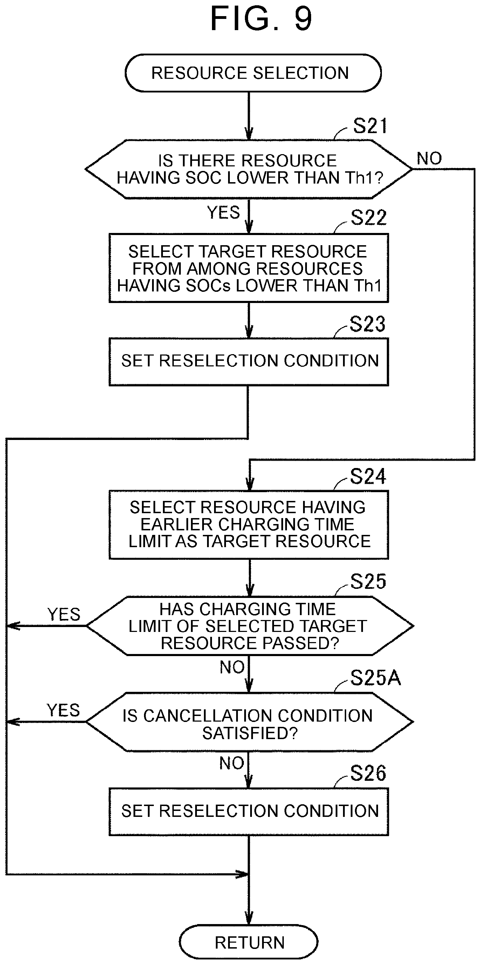

A process shown in FIG. 9 may be adopted instead of the process shown in FIG. 5. FIG. 9 is a flowchart showing a modification of the process shown in FIG. 5. In the process shown in FIG. 9, S25A is added between S25 and S26 of the process shown in FIG. 5.

In S25A, the server 300 determines whether a predetermined cancellation condition is satisfied. The cancellation condition may be satisfied when a value obtained by subtracting a charging and discharging amount necessary during the VPP period in the vehicle group from a charging and discharging amount outputtable during the VPP period in the vehicle group (difference between the two) is equal to or larger than a predetermined value, and may be unsatisfied otherwise. Alternatively, the cancellation condition may be satisfied when a value obtained by dividing the charging and discharging amount outputtable during the VPP period in the vehicle group by the charging and discharging amount necessary during the VPP period in the vehicle group is equal to or larger than a predetermined value, and may be unsatisfied otherwise. Alternatively, the cancellation condition may be satisfied when a value obtained by subtracting a charging and discharging output necessary during the VPP period in the vehicle group from a charging and discharging output outputtable during the VPP period in the vehicle group (difference between the two) is equal to or larger than a predetermined value, and may be unsatisfied otherwise. Alternatively, the cancellation condition may be satisfied when a value obtained by dividing the charging and discharging output outputtable during the VPP period in the vehicle group by the charging and discharging output necessary during the VPP period in the vehicle group is equal to or larger than a predetermined value, and may be unsatisfied otherwise. The vehicle group includes, for example, the vehicles 100A, 100B, 100C. Each of the charging and discharging amount and the charging and discharging output necessary during the VPP period in the vehicle group may be the contract amount (winning bid amount). Also in the present modification, the VPP period corresponds to an example of the "target period" according to the present disclosure.

When the cancellation condition is not satisfied (NO in S25A), the reselection condition is set in S26, and then the series of processes shown in FIG. 9 is terminated. When the cancellation condition is satisfied (YES in S25A), the series of processes shown in FIG. 9 is terminated without setting the reselection condition (S26). Thus, reselection for suppressing a case where the power storage devices (for example, the batteries 110A, 110B, 110C) reach the target charging amounts is not executed (see FIG. 4). The satisfaction of the cancellation condition means that the process of suppressing the state in which the power storage devices reach the target charging amounts is cancelled. By canceling the suppression process, the charging ON/OFF count can be reduced.

In the above embodiment, description has been given of the example in which the server 300 executes the charging control on the battery 110 by controlling the EVSE 200. The server 300 may remotely control a charger mounted on the vehicle 100 while transmitting a command directly to the vehicle 100 without intermediation of the EVSE 200 (for example, while wirelessly communicating with the vehicle 100). The server 300 may execute the energy management by controlling the charger mounted on each vehicle to switch execution (ON) and stop (OFF) of charging instead of executing control for causing the charging power to follow the target value. In the configuration in which the server 300 and the vehicle 100 communicate wirelessly, the server 300 may sequentially receive, from the vehicle 100 in real time, information indicating the position and state of the vehicle 100, and may sequentially update the vehicle information. The server 300 may predict the scheduled departure time of the vehicle 100 by using the information received from the vehicle 100.

In the above embodiment, an on-premises server (server 300) functions as a computer that executes the energy management for the power grid PG (external power supply). However, the present disclosure is not limited to this, and the functions of the server 300 (in particular, the functions related to the energy management) may be implemented on a cloud by cloud computing.

The power grid PG (external power supply) is not limited to a large-scale alternating current grid, and may be a microgrid or a direct current (DC) grid. The number of vehicles in the vehicle group 1 is any number, and may be three or more and less than 30, 30 or more and less than 100, or 100 or more. The EVSE group 2 may include any number of EVSE units. The EVSE group 2 may include a plurality of types of EVSE units (for example, normal chargers and fast chargers). The EVSE group 2 may include at least one of public EVSE units (for example, EVSE units installed in commercial facilities, car dealerships, or expressway rest areas) and non-public EVSE units (for example, home EVSE units).

The configuration of the vehicle used for power balancing (energy management) is not limited to the configuration described above (see FIG. 3). The vehicle may execute both power balancing by charging and power balancing by discharging (for example, reverse power flow). The vehicle may be a PHEV including a hydrogen engine or a biofuel engine. The vehicle may include a solar panel, may have a flight function, or may be chargeable wirelessly. The wirelessly chargeable vehicle may be regarded as entering a state analogous to the "plugged-in state" when a power transmission unit (for example, a power transmission coil) on the power supply equipment side and a power reception unit (for example, a power reception coil) on the vehicle side have been aligned in position. The vehicle is not limited to a four-wheeled passenger car, and may be a bus, a truck, or a three-wheeled BEV.

The number of power storage devices used for the energy management is not limited to three, and can be changed as appropriate. The resource including the power storage device for the energy management is not limited to an automobile, and may be a vehicle other than the automobile (railroad vehicle, ship, airplane, etc.), an unmanned mobile object (automated guided vehicle, agricultural machinery, a walking robot, a drone, a robot cleaner, a space probe, etc.), or a stationary power storage system. The resource may include a power conversion circuit that executes power conversion on the input and output of the power storage device (for example, an inverter that executes alternating-current (AC) to direct-current (DC) conversion).

The embodiment disclosed herein should be considered to be exemplary and not restrictive in all respects. The scope of the present disclosure is shown by the claims rather than by the above description of the embodiment, and is intended to include all modifications within the meaning and scope equivalent to the claims.

## Claims

1. An energy management method comprising:
determining whether a current time is within a target period; and
executing energy management within the target period by a target resource selected from among a plurality of power storage devices, wherein the executing the energy management includes:
charging the target resource to execute the energy management within the target period; and
reselecting the target resource from among the power storage devices for suppression of a state in which each of the power storage devices reaches a target charging amount within the target period.

2. The energy management method according to claim 1, wherein:
the power storage devices are mounted on vehicles (100, 100A, 100B, 100C); and
the reselecting the target resource includes selecting the target resource by using remaining power storage amounts of the power storage devices and scheduled departure times of the vehicles (100, 100A, 100B, 100C).

3. The energy management method according to claim 2, wherein:
the reselecting the target resource includes selecting a power storage device having an earlier charging time limit as the target resource with priority from among the power storage devices;
the charging time limit of the power storage device is a time earlier by a remaining charging period of the power storage device than the scheduled departure time of the vehicle (100, 100A, 100B, 100C) including the power storage device; and
the remaining charging period of the power storage device is a period required to increase the remaining power storage amount of the power storage device to a target value.

4. The energy management method according to claim 3, wherein the reselecting the target resource includes:
determining whether the remaining charging period of the target resource selected based on the charging time limit is equal to or shorter than a predetermined period; and
reselecting the target resource from among the power storage devices when determination is made that the remaining charging period is equal to or shorter than the predetermined period.

5. The energy management method according to claim 2, wherein the reselecting the target resource includes:
selecting a power storage device having the remaining power storage amount smaller than a predetermined first reference value as the target resource with priority from among the power storage devices;
determining whether the remaining power storage amount of the target resource selected based on the remaining power storage amount is equal to or larger than a second reference value that is preset equal to or larger than the first reference value; and
reselecting the target resource from among the power storage devices when determination is made that the remaining power storage amount is equal to or larger than the second reference value.

6. The energy management method according to claim 1, further comprising canceling the suppression of the state in which the target charging amount is reached when a difference between a charging and discharging amount outputtable during the target period in a vehicle group (1) and a charging and discharging amount necessary during the target period in the vehicle group (1) is equal to or larger than a predetermined value, wherein vehicles (100, 100A, 100B, 100C) included in the vehicle group (1) include the power storage devices.

7. The energy management method according to claim 1, further comprising canceling the suppression of the state in which the target charging amount is reached when a value obtained by dividing a charging and discharging amount outputtable during the target period in a vehicle group (1) by a charging and discharging amount necessary during the target period in the vehicle group (1) is equal to or larger than a predetermined value, wherein vehicles (100, 100A, 100B, 100C) included in the vehicle group (1) include the power storage devices.

8. The energy management method according to claim 1, further comprising canceling the suppression of the state in which the target charging amount is reached when a difference between a charging and discharging output outputtable during the target period in a vehicle group (1) and a charging and discharging output necessary during the target period in the vehicle group (1) is equal to or larger than a predetermined value, wherein vehicles (100, 100A, 100B, 100C) included in the vehicle group (1) include the power storage devices.

9. The energy management method according to claim 1, further comprising canceling the suppression of the state in which the target charging amount is reached when a value obtained by dividing a charging and discharging output outputtable during the target period in a vehicle group (1) by a charging and discharging output necessary during the target period in the vehicle group (1) is equal to or larger than a predetermined value, wherein vehicles (100, 100A, 100B, 100C) included in the vehicle group (1) include the power storage devices.

10. A storage medium (330) storing a program, the program causing a computer to execute the energy management method according to any one of claims 1 to 9.

11. A computer device comprising:
the storage medium (330) storing the program according to claim 10; and
a processor (310) configured to execute the program.
